# DEMANDE DE BREVET EUROPEEN

(11) **EP 4 682 030 A1**
(43) Date de publication de la demande: **21.01.2026**
(21) Numéro de dépôt: 25186131.6
(22) Date de dépôt: 30.06.2025
(51) Int. Cl.: B62D 27/06, B62D 35/00, B62D 65/16

(54) **ARRANGEMENT POUR VÉHICULE AUTOMOBILE COMPRENANT UN HAYON ET UN BECQUET DISPOSÉ SUR LA PORTE DE COFFRE DU HAYON**

(30) Priorité: 18.07.2024 FR 2407908
(71) Demandeur: Renault s.a.s, 92100 Boulogne Billancourt (FR)
(72) Inventeur: TEYSSIER, Charles, 78280 GUYANCOURT (FR)

(57) **Abrégé**

Arrangement pour un véhicule automobile (100) comprenant
- une porte de hayon (1), comprenant une couche de structure et une couche de revêtement,
- un becquet (2) disposé sur la porte de hayon (1), le becquet (2) comprenant une extrémité (25) en forme de pointe fine, et
- un moyen de fixation apte à fixer la pointe fine de l'extrémité (25) sur la porte de hayon (1),
le hayon comprenant :
- une partie saillante, disposée à proximité de l'extrémité (25), s'étendant selon une direction donnée, la partie saillante étant percée selon la direction donnée,
- un trou réalisé dans la couche de structure de la porte de hayon (1), et
- une vis insérée dans le trou de la couche de structure puis dans le perçage de la partie saillante.

## Description

L'invention concerne un arrangement pour véhicule automobile comprenant une porte de coffre de hayon et un becquet disposé sur la porte de coffre de hayon. L'invention porte en outre sur un véhicule automobile équipé d'un tel arrangement.

Les hayons de véhicules automobiles peuvent être équipés d'un becquet pour améliorer les performances aérodynamiques du véhicule automobile. Le becquet permet alors de recoller à la surface du véhicule automobile un flux d'air qui s'est décollé, par exemple un flux d'air s'étant décollé du véhicule automobile au passage de la limite du toit du véhicule. Un tel becquet peut être placé en dessous d'une lunette arrière du hayon.

Le becquet remplit également une fonction d'amélioration de l'esthétique du véhicule automobile, selon des critères variés. Un premier critère porte sur le fait d'arriver à faire coïncider les extrémités du becquet avec des points les plus extérieurs de la porte de coffre du hayon. Un deuxième critère porte sur le positionnement des points de fixation du becquet sur la porte de coffre du hayon, qui doivent se situer au plus près des extrémités du becquet. Un troisième critère porte en outre sur la forme du becquet, notamment sur une forme de becquet présentant des extrémités en forme de pointe fine. Ces différents critères sont difficiles à concilier entre eux, notamment parce qu'une des extrémités en forme de pointe fine réduit les possibilités de fixation du becquet.

Différents moyens de fixation des extrémités d'un becquet existent.

Toutefois, ces solutions présentent des inconvénients. Notamment elles ne permettent pas de fixer les extrémités pointues d'un becquet.

Le but de l'invention est de fournir un arrangement pour véhicule automobile comprenant un hayon et un becquet disposé sur la porte de coffre du hayon remédiant aux inconvénients ci-dessus et améliorant les arrangements comprenant un hayon et un becquet disposé sur la porte de coffre du hayon connus de l'art antérieur. En particulier, l'invention permet de réaliser un arrangement qui soit simple et fiable et qui soit apte à fixer des extrémités pointues d'un becquet sur une porte de coffre d'un hayon.

A cet effet, l'invention porte sur un arrangement pour un véhicule automobile comprenant
- une porte de hayon, comprenant une couche intérieure dite de structure et une couche extérieure dite de revêtement,
- un becquet disposé sur la porte de hayon, le becquet s'étendant selon une direction latérale du véhicule automobile, le becquet comprenant au moins une extrémité en forme de pointe fine, et
- au moins un moyen de fixation apte à fixer la pointe fine de l'au moins une extrémité du becquet sur la porte de hayon.

En outre, le moyen de fixation comprend :
(i) une partie saillante, notamment sensiblement cylindrique, disposée sur le becquet et à proximité de l'au moins une extrémité en forme de pointe fine du becquet, s'étendant principalement selon une direction donnée, la partie saillante étant percée selon la direction donnée,
(ii) un trou réalisé dans la couche de structure de la porte de hayon, et
(iii) une vis insérée dans le trou de la couche de structure puis dans le perçage de la partie saillante.

Dans un mode de réalisation, l'arrangement comprend en outre un vitrage disposé sur la porte de hayon, et
le becquet comprend une première surface, notamment sensiblement plane, délimitée par une bordure intérieure et une bordure extérieure, les bordures intérieure et extérieure de la première surface se rejoignant en au moins une de leurs extrémités en formant une pointe fine, notamment la bordure intérieure étant définie pour longer un profil du vitrage et la bordure extérieure étant définie pour longer un profil de la porte de hayon. De plus la partie saillante de l'au moins un moyen de fixation est reliée à la première surface, et une position de partie saillante selon la direction latérale est définie de sorte que
- une distance entre une extrémité en forme de pointe fine de la première surface et la partie saillante située à proximité de ladite extrémité soit minimale, et
- une projection selon la direction donnée de la partie saillante soit contenue dans la première surface.

Dans un mode de réalisation, la partie saillante et la première surface sont réalisées dans un matériau déformable de sorte que
- une première fixation de la vis dans le perçage de la partie saillante crée un filetage femelle de la partie saillante ajusté au filetage mâle de la vis, et/ou
- la fixation de la vis dans le perçage de la partie saillante crée une étanchéité, au niveau du moyen de fixation, entre une face inférieure de la première surface et une face supérieure de la couche de revêtement de la porte de hayon.

Dans un mode de réalisation, une distance entre une extrémité du becquet et la partie saillante est strictement inférieure à 40 millimètres, voire à 60 millimètres.

Dans un mode de réalisation, la partie saillante est sensiblement de forme cylindrique et un diamètre d'une projection selon la direction donnée de la partie saillante sur la première surface est strictement inférieure à 10 millimètres, voire à 15 millimètres.

Dans un mode de réalisation, l'au moins un moyen de fixation est démontable.

Dans un mode de réalisation, becquet comprend en outre,
- une deuxième surface dont un bord inférieur est relié à la bordure intérieure de la première surface et dont un bord supérieur s'étend dans un espace situé au-dessus de la première surface, la deuxième surface formant un angle obtus avec la première surface,
- une troisième surface dont un bord inférieur est relié à la bordure extérieure (212) de la première surface et dont un bord supérieur s'étend dans un espace situé au-dessus de la première surface, la troisième surface formant un angle obtus avec la première surface, et
- une quatrième surface s'étendant de sorte à recouvrir le bord supérieur de la deuxième surface et le bord supérieur de la troisième surface.

Dans un mode de réalisation, les première, deuxième et troisième surfaces sont fabriquées dans une première matière sélectionnée pour répondre à un compromis entre des critères de robustesse et des critères de déformabilité, et la quatrième surface est fabriquée dans une deuxième matière sélectionnée pour répondre à des critères esthétiques.

L'invention porte en outre sur un procédé de montage d'un arrangement selon l'invention, comprenant une étape de fixation du becquet sur la porte de hayon, l'étape de fixation comprenant
- une sous-étape d'insertion de la partie saillante de l'au moins un moyen de fixation de l'arrangement dans un trou réalisé dans la couche de revêtement de la porte de hayon de l'arrangement, et de positionnement de la partie saillante en face d'un trou réalisé dans la couche de structure de la porte de hayon de l'arrangement, puis
- une sous-étape de vissage de la vis de l'au moins un moyen de fixation de l'arrangement dans la partie saillante de l'au moins un moyen de fixation de l'arrangement jusqu'à ce qu'une tête de la vis appuie sur la couche de structure de la porte de hayon de l'arrangement, et la face inférieure de la première surface du becquet de l'arrangement appuie sur la couche de revêtement de la porte de hayon.

Dans un mode de réalisation, la sous-étape de vissage se déroule dans le volume intérieur d'un coffre du véhicule automobile.

Dans un mode de réalisation, le procédé comprend, précédemment à l'étape de fixation du becquet sur la porte de hayon, une étape de collage du vitrage sur la porte de hayon,
et, après exécution de l'étape de fixation du becquet sur la porte de hayon, le vitrage et le becquet sont disposés de sorte que le becquet surplombe une bordure inférieure du vitrage.

Le dessin annexé représente, à titre d'exemple, un mode de réalisation d'un dispositif de détermination selon l'invention et un mode d'exécution d'un procédé de détermination selon l'invention.
[Fig. 1] La figure 1 représente schématiquement un véhicule automobile équipé d'un arrangement selon l'invention.
[Fig. 2] La figure 2 définit un repère orthonormé direct d'un véhicule automobile équipé d'un arrangement selon l'invention.
[Fig. 3] La figure 3 est une vue de dessus d'un arrangement selon l'invention.
[Fig. 4] La figure 4 est une vue en coupe d'un arrangement selon l'invention.
[Fig. 5] La figure 5 est une première vue en perspective d'un arrangement selon l'invention.
[Fig. 6] La figure 6 est une deuxième vue en perspective d'un arrangement selon l'invention.

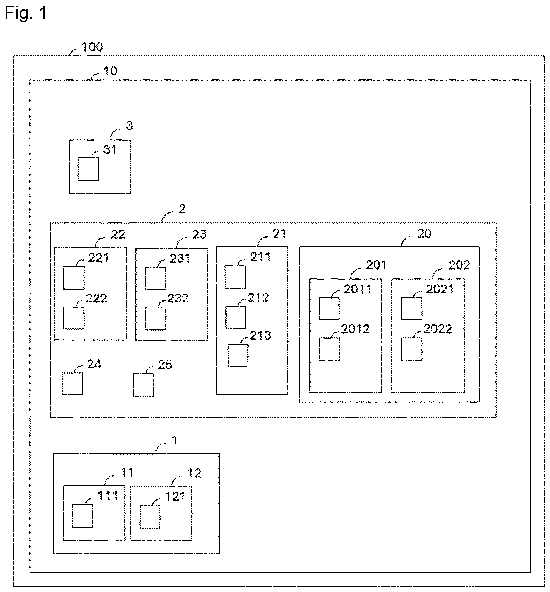

Un exemple d'un véhicule automobile équipé d'un mode de réalisation d'un arrangement selon l'invention est décrit en référence aux figures 1 à 6.

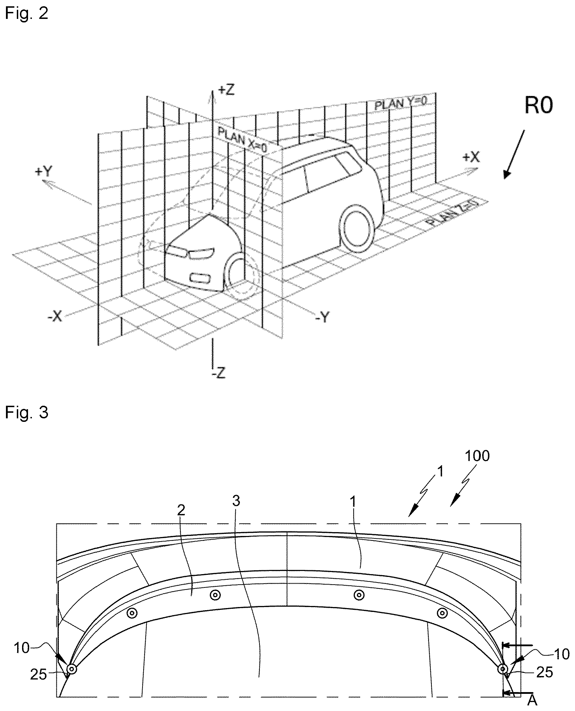

Pour les besoins de la description, et en référence à la figure 2, on utilise un repère orthonormé direct R0, d'axes X,Y,Z classiquement utilisé en conception automobile, dans lequel
- l'axe X désigne la direction longitudinale avant-arrière du véhicule automobile 100, orienté vers l'arrière,
- l'axe Y désigne la direction transversale et est orienté vers la droite du véhicule automobile 100, et
- l'axe Z désigne la direction verticale, et est orienté vers le haut.

Dans la suite du document, les termes « bordure inférieure », « bordure supérieure », « au-dessus », « en dessous » sont définis en référence à la direction de l'axe vertical Z du repère R0.

Le véhicule automobile 100 est avantageusement un véhicule comprenant un hayon.

Le véhicule automobile 100 est équipé d'un arrangement selon l'invention comprenant :
- une porte de hayon 1, comprenant une couche intérieure 11 dite de structure et une couche extérieure 12 dite de revêtement,
- un becquet 2 disposé sur la porte de hayon 1, le becquet 2 s'étendant selon une direction latérale Y du véhicule automobile 100, le becquet 2 comprenant au moins une extrémité 25 en forme de pointe fine, et
- au moins un moyen de fixation 20 apte à fixer l'au moins une extrémité 25 en forme de pointe fine sur la porte de hayon 1,
chaque moyen de fixation 20 comprenant :
- une partie saillante 201, notamment sensiblement cylindrique, disposée sur le becquet 2 et à proximité de l'au moins une pointe fine du becquet 2, s'étendant principalement selon une direction donnée D1, la partie saillante 201 étant percée selon la direction donnée D1,
- un trou 111 réalisé dans une couche de structure 11 de la porte de hayon 1, et
- une vis 202 insérée dans le trou de la couche de structure 11 puis dans le perçage 2011 de la partie saillante 201.

Le diamètre du trou 111 de la couche de structure 11 est inférieur à une dimension (notamment un diamètre) d'une tête 2021 de la vis 202 du moyen de fixation 20. Ainsi, lors du vissage, la tête 2021 de la vis 202 est apte à exercer un appui sur la couche de structure 11 de la porte de hayon 1.

Dans la suite du document, le terme « pointe fine » désigne une extrémité très mince, ou effilée. Un becquet comprenant deux extrémités en forme de pointe fine est un becquet dont les différentes faces se rejoignent progressivement en un point. Notamment, les extrémités du becquet ne comprennent pas d'arête.

L'arrangement comprend en outre un vitrage 3 disposé, notamment collé, sur la porte de hayon 1.

Dans le mode de réalisation illustré par les figures 2 à 5, le becquet 2 de l'arrangement selon l'invention comprend une première surface 21, notamment sensiblement plane, délimitée par une bordure intérieure 211 et une bordure extérieure 212, les lignes intérieure et extérieure se rejoignant à leurs extrémités 25 en formant deux pointes fines. La bordure intérieure 211 est avantageusement définie pour longer un profil du vitrage 3 de l'arrangement. La bordure extérieure 212 est avantageusement définie pour longer un profil de la couche de revêtement 12 de la porte de hayon 1.

Dans un mode de réalisation, les lignes intérieure et extérieure sont au moins partiellement arquées.

L'expression « longer un profil » est utilisée pour décrire le fait que, par exemple, la bordure intérieure 211 forme une première ligne sensiblement parallèle à deuxième ligne qui serait dessinée par une section du vitrage 3 selon un plan (X,Y) passant par la première ligne.

Dans un mode de réalisation, la première surface 21 est sensiblement comprise dans un plan parallèle à un plan (X,Y). Alternativement, la première surface 21 forme un angle inférieur à 45 degrés avec un plan (X, Y), voire un angle inférieur à 30 degrés, voire un angle inférieur à 20 degrés.

La première surface 21 du becquet 2 comprend une face interne orientée vers l'intérieur du coffre de hayon, et une face externe orientée vers l'extérieur du coffre de hayon.

La forme saillante de l'au moins une fixation est disposée sur la face interne de la première surface 21 du becquet 2, respectivement à proximité l'au moins une extrémité 25 de la première surface 21 formant une pointe fine. La partie saillante 201 s'étend selon une direction donnée D1 formant un angle A1 non nul avec la première surface 21 du becquet 2, l'angle A1 pouvant être égal à 90 degrés.

La forme saillante est percée selon la direction D1.

La forme saillante est réalisée dans un matériau facilement déformable, par exemple un polymère du type polypropylène. Ainsi, une première fixation de la vis de l'arrangement dans le perçage de la partie saillante 201 crée un filetage 2022 femelle de la partie saillante 201 ajusté au filetage mâle 2022 de la vis 202.

Avantageusement, une position de la partie saillante 201 selon l'axe Y est définie de sorte que la face interne de la première surface 21 du becquet 2 recouvre complètement une jonction entre la partie saillante 201 et la première surface 21. En d'autres termes, une distance mesurée selon l'axe Y, entre le point extrême d'une pointe du becquet 2 et le centre du perçage de la partie saillante 201 est définie de sorte que la partie saillante 201 ne déborde pas de la face interne de la première surface 21. Une projection selon la direction donnée D1 de la partie saillante 201 sur la face interne est contenue dans la face interne.

Avantageusement, la jonction entre la partie saillante 201 et la première surface 21 est très réduite, de sorte que la partie saillante 201 peut être disposée à proximité d'un point extrême d'une pointe du becquet 2. Notamment, une distance entre le centre de perçage de la partie saillante 201 et le point extrême d'une pointe de becquet 2 est strictement inférieure à 40 millimètres, voire à 60 millimètres.

Dans un mode de réalisation, la partie saillante 201 est sensiblement de forme cylindrique et un diamètre d'une projection selon la direction donnée D1 de la partie saillante 201 sur la première surface 21 est strictement inférieure à 10 millimètres, voire à 15 millimètres.

Avantageusement, la partie saillante 201 est réalisée dans un matériau facilement déformable et une première fixation de la vis 202 dans le perçage de la partie saillante 201 crée un filetage femelle 2012 de la partie saillante 201 ajusté au filetage mâle 2022 de la vis 202. Ce mode de réalisation du filetage intérieur de la partie saillante 201 permet de maximiser une surface de contact entre le filetage mâle 2022 de la vis 202 et le filetage femelle 2012 de la partie saillante 201, ce qui augmente une résistance de la fixation.

De plus, dans un mode de réalisation avantageux, la première surface 21 est réalisée dans un matériau déformable de sorte que la fixation de la vis 202 dans le perçage de la partie saillante 201 crée une étanchéité, au niveau du moyen de fixation 20, entre une face inférieure 213 de la première surface 21 et une face supérieure de la couche de revêtement 12 de la porte de hayon 1.

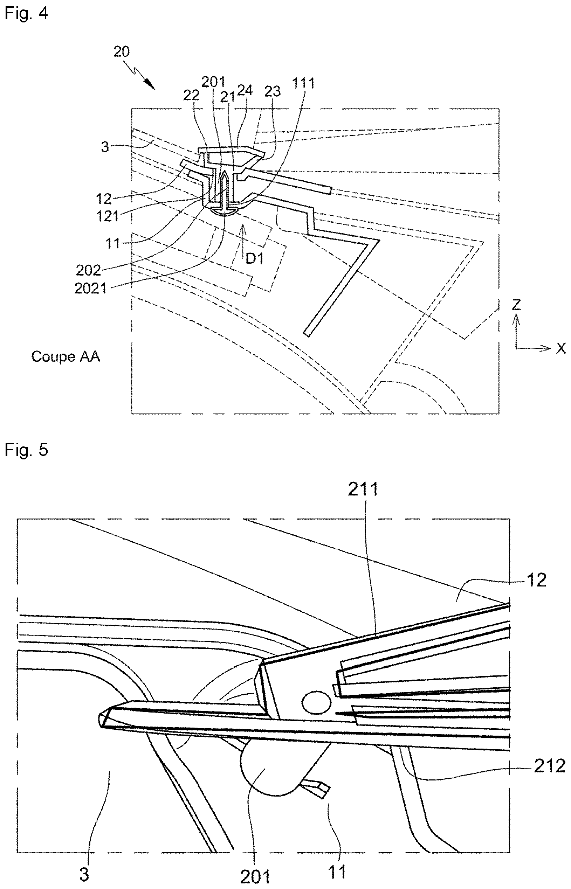

En effet, comme cela est plus particulièrement visible sur la figure 4, la couche de revêtement 12 est en contact avec la face inférieure 213 de la première surface 21. Le vissage de la vis 202 dans la partie saillante 201 crée une force qui tend à rapprocher l'une de l'autre la première surface 21 du becquet 2 et la couche de structure 11. La couche de revêtement 12 est alors comprimée, notamment contre la face inférieure 213 de la première surface 21, ce qui crée une étanchéité au niveau de la zone de compression. De cette façon, l'eau ne peut pas s'introduire dans le véhicule automobile 100, notamment le coffre, via l'ouverture réalisée pour le passage de la partie saillante 201.

Avantageusement, le premier et le deuxième moyen de fixation 20 sont démontables, ce qui permet de cibler la réparation de l'arrangement sur la ou les pièces qui le nécessitent.

Le becquet 2 comprend en outre
- une deuxième surface 22 dont un bord inférieur 221 est relié à la bordure intérieure 211 de la première surface 21 et dont un bord supérieur 222 s'étend dans un espace situé au-dessus de la première surface 21, la deuxième surface 22 formant un angle obtus avec la première surface 21,
- une troisième surface 23 dont un bord inférieur 231 est relié à la bordure extérieure 212 de la première surface 21 et dont un bord supérieur 232 s'étend dans un espace situé au-dessus de la première surface 21, la troisième surface formant un angle obtus avec la première surface 21, et
- une quatrième surface 24 s'étendant de sorte à recouvrir le bord supérieur 222 de la deuxième surface 22 et le bord supérieur 232 de la troisième surface.

De plus, les première, deuxième et troisième surfaces sont fabriquées dans une première matière sélectionnée pour répondre à un compromis entre des critères de robustesse et des critères de déformabilité, et la quatrième surface est fabriquée dans une deuxième matière sélectionnée pour répondre à des critères esthétiques.

La première matière peut être par exemple du PP-MD30.

La deuxième matière peut être par exemple, du P/E-I-MD30.

Ainsi, les première, deuxième et troisième surface, forment ensemble une partie interne du becquet 2 qui n'est pas visible lorsque le becquet 2 est monté sur le véhicule automobile 100, et la quatrième surface réalise la partie externe du becquet 2, qui est visible de l'extérieur du véhicule automobile 100.

Avantageusement, l'ensemble des première, deuxième et troisième surfaces et la partie saillante 201 sont réalisées ensemble par moulage.

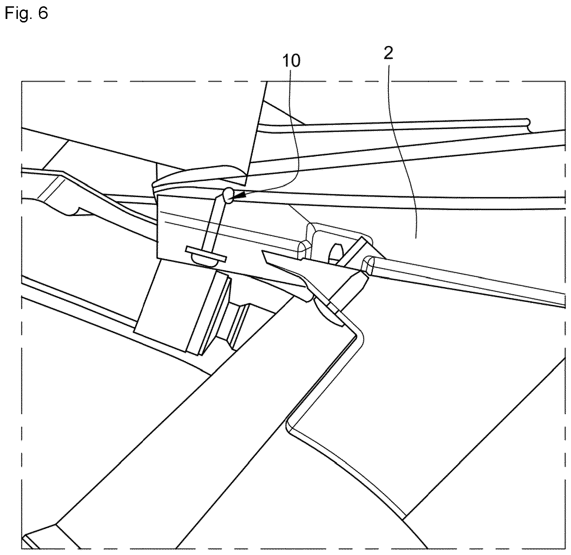

L'invention porte en outre sur un procédé de montage d'un arrangement selon l'invention. Un mode de réalisation du procédé de montage est décrit ci-après en référence à la figure 6.

Dans une première étape E1, on colle un vitrage 3 sur la porte de hayon 1. Le positionnement de la vitre sur la porte de hayon 1 est avantageusement réalisée avant de fixer le becquet 2. En effet, cela permet par la suite de placer le becquet 2 de sorte que le becquet 2 recouvre une bordure inférieure 31 du vitrage 3.

De façon plus générale, le vitrage 3 et le becquet 2 sont disposés de sorte que le becquet 2 surplombe une bordure inférieure 31 du vitrage 3. Le terme « surplomber » est utiliser pour décrire le fait qu'un bord du becquet 2 se situe au-dessus, relativement à l'axe Z, d'une bordure inférieure 31 du vitrage 3.

Puis dans une deuxième étape E2, on insère la partie saillante 201 de l'au moins un moyen de fixation 20 de l'arrangement dans un trou 121 réalisé dans la couche de revêtement 12 de la porte de hayon 1 de l'arrangement, et on positionne la partie saillante 201 en face d'un trou 111 réalisé dans la couche de structure 11 de la porte de hayon 1 de l'arrangement.

Ensuite on ouvre le coffre du hayon.

Puis, on se place dans l'espace intérieur du coffre pour visser la vis 202 de l'au moins un moyen de fixation 20 de l'arrangement dans la partie saillante 201 de l'au moins un moyen de fixation 20 de l'arrangement jusqu'à ce qu'une tête 2021 de la vis 202 appuie sur la couche de structure 11 de la porte de hayon 1 de l'arrangement, et jusqu'à ce que la face inférieure 213 de la première surface 21 du becquet 2 de l'arrangement appuie sur la couche de revêtement 12 de la porte de hayon 1.

Durant l'étape de vissage, la vis 202 traverse d'abord la couche de structure 11 de la porte de hayon 1 puis la partie saillante 201, et la fixation du becquet 2 sur la porte de hayon 1 est mise en œuvre par un appui d'une tête 2021 de la vis 202 sur la couche de structure 11.

Finalement, l'arrangement selon l'invention apporte une solution avantageuse pour fixer à une porte de hayon un becquet dont les extrémités sont en forme de pointe fine.

Un premier avantage de l'invention porte sur la compacité du moyen de fixation, qui permet un placement le plus latéral possible des dispositifs de fixation destinés à fixer les extrémités 25 du becquet. En plus d'améliorer l'aspect esthétique du becquet, un tel placement des dispositifs de fixation limite les possibilités d'accrochage d'une extrémité du becquet, notamment lors d'un nettoyage du véhicule. De plus, la compacité du moyen de fixation, permet son montage dans un environnement pourtant très contraint.

Un deuxième avantage de l'invention porte sur le caractère démontable du dispositif de fixation, qui permet de démonter l'arrangement et ainsi de cibler la réparation de l'arrangement sur la ou les pièces qui le nécessitent.

Un troisième avantage de l'invention porte sur la mise en œuvre d'un moyen d'étanchéité autour des dispositifs de fixation.

## Revendications

1. Arrangement (10) pour un véhicule automobile (100) comprenant
- une porte de hayon (1), comprenant une couche intérieure (11) dite de structure et une couche extérieure (12) dite de revêtement,
- un becquet (2) disposé sur la porte de hayon (1), le becquet (2) s'étendant selon une direction latérale (Y) du véhicule automobile (100), le becquet (2) comprenant au moins une extrémité (25) en forme de pointe fine, et
- au moins un moyen de fixation (20) apte à fixer la pointe fine de l'au moins une extrémité (25) du becquet (2) sur la porte de hayon (1), **caractérisé en ce que** le moyen de fixation (20) comprend :
(i) une partie saillante (201), notamment sensiblement cylindrique, disposée sur le becquet (2) et à proximité de l'au moins une extrémité (25) en forme de pointe fine du becquet (2), s'étendant principalement selon une direction donnée (D1), la partie saillante (201) étant percée selon la direction donnée (D1),
(ii) un trou (111) réalisé dans la couche de structure (11) de la porte de hayon (1), et
(iii) une vis (202) insérée dans le trou (111) de la couche de structure (11) puis dans le perçage (2011) de la partie saillante (201).

2. Arrangement (10) selon la revendication précédente comprenant en outre un vitrage (3) disposé sur la porte de hayon (1), **caractérisé en ce que** le becquet (2) comprend une première surface (21), notamment sensiblement plane, délimitée par une bordure intérieure (211) et une bordure extérieure (212), les bordures intérieure et extérieure de la première surface (21) se rejoignant en au moins une de leurs extrémités (25) en formant une pointe fine, notamment la bordure intérieure (211) étant définie pour longer un profil du vitrage (3) et la bordure extérieure (212) étant définie pour longer un profil de la porte de hayon (1),
**caractérisé en ce que** la partie saillante (201) de l'au moins un moyen de fixation (20) est reliée à la première surface (21), et **en ce qu'**une position de partie saillante (201) selon la direction latérale (Y) est définie de sorte que
- une distance entre une extrémité (25) en forme de pointe fine de la première surface (21) et la partie saillante (201) située à proximité de ladite extrémité soit minimale, et
- une projection selon la direction donnée (D1) de la partie saillante (201) soit contenue dans la première surface (21).

3. Arrangement (10) selon la revendication précédente, **caractérisé en ce que** la partie saillante (201) et la première surface (21) sont réalisées dans un matériau déformable de sorte que
- une première fixation de la vis (202) dans le perçage de la partie saillante (201) crée un filetage femelle (2012) de la partie saillante (201) ajusté au filetage mâle (2022) de la vis, et/ou
- la fixation de la vis (202) dans le perçage de la partie saillante (201) crée une étanchéité, au niveau du moyen de fixation, entre une face inférieure (213) de la première surface (21) et une face supérieure (122) de la couche de revêtement (12) de la porte de hayon (1).

4. Arrangement (10) selon l'une des revendications précédentes, **caractérisé en ce qu'**une distance entre une extrémité (25) du becquet (2) et la partie saillante (201) est strictement inférieure à 40 millimètres, voire à 60 millimètres.

5. Arrangement (10) selon l'une des revendications précédentes, **caractérisé en ce que** la partie saillante (201) est sensiblement de forme cylindrique et **en ce qu'**un diamètre d'une projection selon la direction donnée (D1) de la partie saillante (201) sur la première surface (21) est strictement inférieure à 10 millimètres, voire à 15 millimètres.

6. Arrangement (10) selon l'une des revendications précédentes, **caractérisé en ce que** l'au moins un moyen de fixation est démontable.

7. Arrangement (10) selon l'une des revendications 2 à 6, **caractérisé en ce que** le becquet (2) comprend en outre,
- une deuxième surface (22) dont un bord inférieur (221) est relié à la bordure intérieure (211) de la première surface (21) et dont un bord supérieur (222) s'étend dans un espace situé au-dessus de la première surface (21), la deuxième surface (22) formant un angle obtus avec la première surface (21),
- une troisième surface (23) dont un bord inférieur (231) est relié à la bordure extérieure (212) de la première surface (21) et dont un bord supérieur (232) s'étend dans un espace situé au-dessus de la première surface (21), la troisième surface formant un angle obtus avec la première surface (21), et
- une quatrième surface (24) s'étendant de sorte à recouvrir le bord supérieur (222) de la deuxième surface (22) et le bord supérieur (232) de la troisième surface (23).

8. Arrangement (10) selon la revendication précédente, **caractérisé en ce que** les première, deuxième et troisième surfaces (21, 22, 23) sont fabriquées dans une première matière sélectionnée pour répondre à un compromis entre des critères de robustesse et des critères de déformabilité, et **en ce que** la quatrième surface (24) est fabriquée dans une deuxième matière sélectionnée pour répondre à des critères esthétiques.

9. Procédé de montage d'un arrangement (10) selon l'une des revendications précédentes, **caractérisé en ce qu'**il comprend une étape (E2) de fixation du becquet (2) sur la porte de hayon (1), comprenant
- une sous-étape d'insertion de la partie saillante (201) de l'au moins un moyen de fixation (20) de l'arrangement (10) dans un trou (121) réalisé dans la couche de revêtement (12) de la porte de hayon (1) de l'arrangement (10), et de positionnement de la partie saillante (201) en face d'un trou réalisé dans la couche de structure (11) de la porte de hayon (1) de l'arrangement (10), puis
- une sous-étape de vissage de la vis (202) de l'au moins un moyen de fixation de l'arrangement (10) dans la partie saillante (201) de l'au moins un moyen de fixation de l'arrangement (10) jusqu'à ce qu'une tête (2021) de la vis (202) appuie sur la couche de structure (11) de la porte de hayon (1) de l'arrangement (10), et la face inférieure (213) de la première surface (21) du becquet (2) de l'arrangement (10) appuie sur la couche de revêtement (12) de la porte de hayon (1).

10. Procédé de montage selon la revendication précédente, **caractérisé en ce que** la sous-étape de vissage se déroule dans le volume intérieur d'un coffre du véhicule automobile (100).

11. Procédé de montage selon l'une des revendications 9 ou 10 d'un arrangement (10) selon l'une des revendications 2 à 8, **caractérisé en ce qu'**il comprend, précédemment à l'étape (E2) de fixation du becquet (2) sur la porte de hayon (1), une étape (E1) de collage du vitrage (3) sur la porte de hayon (1),
et **en ce que**, après exécution de l'étape (E2) de fixation du becquet (2) sur la porte de hayon (1), le vitrage (3) et le becquet (2) sont disposés de sorte que le becquet (2) surplombe une bordure inférieure du vitrage (3).
